# EUROPÄISCHE PATENTANMELDUNG

(11) **EP 1 918 142 A2**
(43) Veröffentlichungstag der Anmeldung: **07.05.2008**
(21) Anmeldenummer: 07020775.8
(22) Anmeldetag: 24.10.2007
(51) Int. Cl.: B60J 5/06

(54) **Dachholm für einen Nutzfahrzeugaufbau, Verfahren zur Herstellung eines solchen Dachholms und Nutzfahrzeugaufbau mit solchen Dachholmen**

(30) Priorität: 04.11.2006 DE 102006052068
(71) Anmelder: TSE Trailer-System-Engineering GmbH & Co. KG, 72365 Ratshausen (DE)
(72) Erfinder: Seifritz, Harald, 82229 Seefeld (DE)
(74) Vertreter: Weber, Gerhard

(57) **Zusammenfassung**

Für einen Nutzfahrzeugaufbau mit in Längsrichtung verlaufenden Dachholmen werden Ausführungsformen mit zusätzlichen Stabilisierungselementen und Verfahren zu deren Herstellung beschrieben.

## Beschreibung

Die Erfindung betrifft einen Dachholm für einen Nutzfahrzeugaufbau, ein Verfahren zur Herstellung eines solchen Dachholms und einen Nutzfahrzeugaufbau mit solchen Dachholmen.

Nutzfahrzeugaufbauten sind in einer Variante gebräuchlich, bei welcher ein durch eine Dachanordnung, insbesondere ein Planendach abgedeckter Laderaum im Dachbereich zwei in Fahrzeuglängsrichtung verlaufende Dachholme aufweist. In bevorzugter Ausführung sind die Dachholme durch Aluminium-Strangpressprofile gebildet, in deren Querschnitt vorteilhafterweise Führungsbahnen für z. B. Spriegel eines Faltdaches, Rollen einer Seitenplanenanordnung, Rollen von Schieberungen ausgebildet sein können. Durch die Ausführung als Aluminium-Strangpressprofile können auf einfache Weise mehrere Funktionen in die Holme integriert und das Gewicht im Interesse eines höheren Ladegewichts niedrig gehalten werden. Die Dachholme sind an entgegen gesetzten Enden an einem Frontaufbau und an ortsfesten Heckrungen vertikal abgestützt. Zusätzliche Rungen im Längsverlauf der Dachholme können für seitliche Beladungsmöglichkeiten als Schieberungen ausgeführt sein, so dass die Dachholme zeitweise nur an den entgegen gesetzten Enden abgestützt sind.

Der vorliegenden Erfindung liegt die Aufgabe zugrunde, einen Dachholm, ein Verfahren zur Herstellung eines solchen und einen Nutzfahrzeugaufbau mit solchen Dachholmen anzugeben, bei welchen ohne Nachteile bei Gewicht und/oder Stabilität die Menge an Aluminium und/oder der Querschnitt verringert werden kann.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Durch das zusätzliche Aussteifungselement bleibt vorteilhafterweise die Eigenschaft der Aluminium-Strangpressprofile, mehrere Funktionen, insbesondere mehrere Längsführungen, auf einfache Weise integriert bereit zu stellen, erhalten und zugleich kann durch das Stabilisierungselement ein Beitrag zur Stabilität des Dachholms geleistet werden und ein ansonsten nur der Stabilität halber vorgesehener Materialanteil des Profilkörpers entfallen. Der Profilkörper besteht vorteilhafterweise in an sich gebräuchlicher Art aus Leichtmetall, insbesondere Aluminium. Profilkörper und Stabilsierungselement sind vorteilhafterweise in einer Weise, insbesondere formschlüssig, miteinander verbunden, durch welche eine Durchbiegung des Profilkörpers fest mit einer Durchbiegung des Stabilisierungselements um ein vorzugsweise gleiches Maß verbunden ist und umgekehrt. Eine Verbindung zwischen Profilkörper und Stabilsierungselement kann insbesondere durch Reibung, elastische Vorspannung, punktuelle Fügeelemente, Formschluss, Kleben, Clinchen oder Schweißen gegeben sein.

Das Stabilisierungselement erstreckt sich vorteilhafterweise ohne Unterbrechung im wesentlichen über die gesamte Länge des Dachholms oder bei einem in Längsrichtung in mehrere trennbare Abschnitte unterteilten Dachholm über die Länge der Abschnitte.

Das Stabilisierungselement ist in der Weise mit dem Profilkörper verbunden, dass es eine Aussteifung des Dachholms gegen Durchbiegung bewirkt. Der Anteil des Stabilisierungselements an der Biegesteifigkeit, zumindest gegen vertikale Durchbiegung, des Dachholms in Betriebsstellung beträgt vorteilhafterweise wenigstens 25 %, insbesondere wenigstens 35 %, vorzugsweise wenigstens 45 % des gesamten Biegesteifigkeitbzw. der gesamten Biegesteifigkeitgegen vertikale Durchbiegung des Dachholms. Die Höhe des Stabilisierungselements ist vorteilhafterweise größer, insbesondere um wenigstens 50 %, vorzugsweise um wenigstens 100 % größer als die Breite des Stabilsierungselements, wodurch insbesondere ein hoher Beitrag des Stabilisierungselements zur Aussteifung des Dachholms gegen horizontale und/oder insbesondere gegen vertikale Durchbiegung erreicht werden kann.

Das zusätzliche Stabilisierungselement ermöglicht vorteilhafterweise, den Querschnitt des Profilkörpers primär nach den zu integrierenden Funktionen und das Stabilisierungselement primär nach den Stabilitätsanforderungen zu gestalten. Das Stabilisierungselement kann auch zusätzliche Funktionen, wie z. B von Führungen oder Teilen davon erfüllen.

Das Stabilisierungselement kann in vorteilhafter Ausführung als im Querschnitt formschlüssig in den Profilkörper eingefügt ausgeführt sein und damit quer zur Längsrichtung durch den Formschluss gehalten sein. Die Verbindung des Stabilisierungselements mit dem Profilkörper erfolgt dabei vorzugsweise durch Ineinanderschieben in Längsrichtung.

In vorteilhafter Ausführung mit an sich bekannter gekrümmter Form des unbelasteten Dachholms kann vorgesehen sein, den Profilkörper und das Stabilisierungselement in linearer Form zusammenzufügen und danach den zusammen gefügten Holm aus der linearen Form in die gekrümmte Form umzuformen, z. B. durch Walzen. Vorteilhafterweise ergibt sich dabei durch das unterschiedliche Verhalten der verschiedenen Materialien von Profilkörper und Stabilisierungselement eine relative Verspannung zwischen diesen. Eine solche Verspannung kann auch auf andere Art, insbesondere auch bei separater Krümmung von Profilkörper und/oder Stabilisierungselement vor dem Zusammenfügen hergestellt werden.

In vorteilhafter Ausführungsform kann das Stabilisierungselement ein Stahlprofil, z. B. in Rohrform oder mit U-förmigem oder H-förmigem Querschnitt usw. sein. Das höhere spezifische Gewicht von Stahl gegenüber Aluminium kann durch die höhere Steifigkeit von Stahl und die für gleichen Beitrag zum Biegewiderstandsmoment wesentlich geringere Querschnittsfläche zumindest teilweise ausgeglichen sein. Stahl hat zudem den Vorteil geringer Materialkosten.

Das Stabilisierungselement liegt vorteilhafterweise in einer Kammer des Profilkörpers, insbesondere einer im Querschnitt mehrseitig oder vorzugsweise vollständig geschlossenen Kammer ein und stützt sich vorteilhafterweise an zumindest Teilflächen von mehreren Wandflächen der Kammer gegen den Profilkörper ab.

Das Stabilisierungselement kann in vorteilhafter Ausführung mit dem Profilkörper verklebt werden, wobei die Verklebung zusätzlich zu oder anstelle einer quer zur Längsrichtung im Querschnitt formschlüssigen Verbindung erfolgen kann.

In vorteilhafter Ausführung kann das Stabilisierungselement aus einem anfänglich fließfähigen oder flexiblen Material durch Aushärten innerhalb einer Kammer des Profilkörpers hergestellt werden. Das Material kann insbesondere ein Kunststoff sein. Das Aushärten kann z. B. durch Reaktion mehrerer vermischter Komponenten, durch Temperatureinwirkung oder Polymerisation erfolgen. Die Aushärtung kann insbesondere auch mit einer Aufschäumung des Materials und/oder einem Verkleben mit Flächen des Profilkörpers verbunden sein. Ein Kunststoffmaterial kann Fasermaterial eingebettet enthalten, z. B. nach Art eines glasfaser- oder kohlefaser-verstärkten Kunststoffs.

Verschiedene Ausführungsformen und Eigenschaften von Stabilisierungselementen und/oder deren Verbindung mit dem Profilkörper können in unterschiedlichen Kombinationen gemeinsam realisiert sein.

Die Erfindung ist nachfolgend anhand bevorzugter Ausführungsbeispiele unter Bezugnahme auf die Abbildungen noch eingehend veranschaulicht. Dabei zeigt:
- Fig. 1: einen Nutzfahrzeugaufbau,
- Fig. 2: ein erstes Ausführungsbeispiel im Profilquerschnitt,
- Fig. 3: ein weiteres Ausführungsbeispiel,
- Fig. 4: ein weiteres Ausführungsbeispiel.

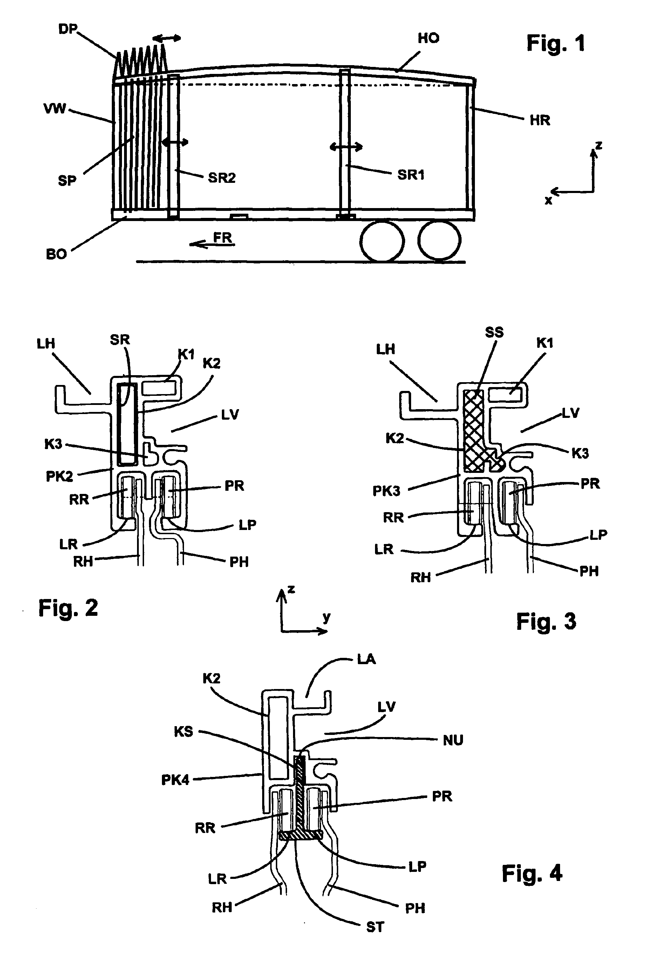

In Fig. 1 ist in Seitenansicht schematisch ein Nutzfahrzeugaufbau als Teil eines Zugfahrzeugs oder eines Anhängers skizziert. Ein Laderaum RA über einer Bodengruppe BO des Fahrzeugs ist oben durch Dachplane DP und seitlich durch in Längsrichtung zusammenschiebbare Seitenplanen SP begrenzt, die in einer in Fahrtrichtung FR verlaufenden Längsrichtung x eines mit eingezeichneten xyz-Koordinatensystems zur Vorderwand VW hin zusammenschiebbar sind. Die Dachplane DP ist über nicht im Detail dargestellte Spriegel entlang von zwei im Dachbereich den Laderaum RA im wesentlichen seitlich begrenzenden Dachholmen HO verschiebbar geführt, insbesondere mittels Rollenanordnungen an den Enden der Spriegel und mit diesen zusammenwirkenden Rollenlaufbahnen in den Dachholmen HO. Die Verschiebung der Seitenplanen SP erfolgt typischerweise gleichfalls über in Führungsbahnen geführte Rollen von einer Mehrzahl von Planenhaltern. Die Holme HO sind an ihren entgegen gesetzten Enden an der Vorderwand VW und an Heckrungen HR vertikal abgestützt. Die Dachholme HO sind ferner in Zwischenpositionen über zusätzliche Rungen gegen die Bodengruppe BO vertikal abgestützt, wobei diese Zwischenrungen für verbesserte seitliche Beladung häufig als Schieberungen ausgeführt sind, welche aus einer geschlossenen Stellung in definierten Längspositionen lösbar und in Längsrichtung verschiebbar sind. In der Skizze nach Fig. 1 ist eine erste Schieberunge SR1 an ihrer für Fahrbetrieb vorgesehenen Position und eine Schieberunge SR2 zur Erzielung einer vergrößerten seitlichen Öffnung in Längsrichtung verschoben eingezeichnet.

Die Dachholme HO sind typischerweise gegen eine exakt lineare Form gekrümmt ausgeführt und zeigen im unbelasteten Zustand eine in z-Richtung nach oben gerichtete Wölbung zwischen ihren entgegen gesetzten Enden gegenüber einer mit unterbrochener Linie als Referenz eingezeichneten geraden Verbindung der Holmenden.

Die Fig. 1 ist nicht maßstäblich zu verstehen. Zur Veranschaulichung sind die relativen Maße verzerrt dargestellt. Insbesondere ist die relative Aufwölbung der Dachholme wesentlich geringer als in der Skizze und beträgt beispielsweise bei einer Länge der Dachholme von 13 m lediglich ca. 100-300 mm.

Die Dachholme HO sind typischerweise als Aluminium-Strangpressprofile ausgeführt, in deren Querschnitten bereits die Rollenlaufbahnen für die Spriegel, die Planenhalter und die Rungenhalter fertig ausgebildet sind.

Die Dachholme sollen, um das lichte Profil des Laderaums RA möglichst wenig zu beeinträchtigen, an den Ecken nur um ein geringes Maß in den Laderaum hineinragen und im Interesse geringen Gewichts und geringer Materialkosten wenig Aluminium erfordern. Da andererseits die Stabilität der Holme bei den typischen Belastungen zuverlässig gewährleistet sein soll, stellen die gängigen Profile immer einen Kompromiss zwischen den verschiedenen Anforderungen dar. Typische bekannte Profile sind das Standard-Curtain-Sider-Profil mit nebeneinander liegenden Rollenführungen für Schieberunge und Seitenplane und z. B. als Mega-Profil bezeichnete hohe Profil mit übereinander liegenden Rollenführungen für Schieberungen und Seitenplane.

Durch ein zusätzliches, sich in Längsrichtung erstreckendes Stabilisierungselement zur Aussteifung des Dachholms kann der Beitrag des reinen Aluminiumprofils zur Biegesteifigkeit des Holms abgesenkt und durch den Beitrag des Stabilisierungselements zur Biegesteifigkeit ausgeglichen werden. Der Beitrag des Stabilisierungselements zur gesamten Biegesteifigkeit des Dachholms beträgt vorzugsweise wenigstens 25 %, insbesondere wenigstens 35 %, vorzugsweise wenigstens 45 % der gesamten Biegesteifigkeit gegen Durchbiegung in horizontaler y-Richtung und/oder insbesondere gegen Durchbiegung in vertikaler z-Richtung.

In Fig. 2 bis Fig. 4 sind unterschiedliche Profilquerschnitte von Aluminium-Profilkörpern in yz-Schnittebene quer zur Holmlängsrichtung in Einbaulage der Dachholme dargestellt. Mit eingezeichnet sind Rollenanordnungen für Seitenplanen und Schieberungen, welche vorteilhafterweise jeweils nur nach einer Seite weisend Rollen an den Planenhaltern bzw. Rungenhaltern aufweisen.

In Fig. 2 ist ein erstes bevorzugtes Ausführungsbeispiel eines erfindungsgemäßen Dachholms im Profilquerschnitt, d. h. in einer Ebene senkrecht zur Längsrichtung des Dachholms skizziert. Der Profilkörper PK2 zeigt im Querschnitt in an sich gebräuchlicher Weise eine Rollenführung LH für erste Rollen und eine Rollenführung LV für zweite Rollen an Enden von nicht mit eingezeichneten Spriegeln, wobei die Rollenführung LH eine vertikale und die Rollenführung LV eine vertikale Abstützung der Spriegel bewirkt. Nach unten sind eine Rollenlaufbahn LP für Führungsrollen PR an Planenhaltern PH und eine Lauffläche LR für Führungsrollen RR an Rungenhaltern RH ausgebildet. In dem Aluminiumprofil sind ferner hohle, im Querschnitt allseitig geschlossene Kammern K1, K2 und K3 ausgebildet.

Gemäß dem in Fig. 2 skizzierten bevorzugten Ausführungsbeispiel ist in die Kammer K2, welche in vertikaler Richtung z wesentlich ausgedehnter ist als in horizontaler Richtung, ein Stabilisierungselement SR in Form eines Rohres aus einem von Aluminium verschiedenen Material, insbesondere aus Stahl eingefügt. Das Stabilisierungselement kann, wie in Fig. 2 skizziert, umlaufend eine im wesentlichen gleiche Wandstärke besitzen, kann aber auch mit an verschiedenen Seiten unterschiedlichen Wandstärken oder anstelle eines Vierkant-Rohrquerschnitts auch eine U-, eine Doppel-T, eine H-Form oder dergleichen aufweisen. Die Herstellung eines Dachholms mit einem Stabilisierungselement nach Art der Fig. 2 erfolgt vorzugsweise dadurch, dass das Stabilisierungselement in linearer Form in das gleichfalls in linearer Form vorliegende Aluminiumprofil in dessen Kammer K2 eingeschoben wird und dass erst danach das zusammengesetzte Holmprofil aus der linearen Form in die gewölbte Form umgeformt wird. Die Umformung kann in an sich bekannter Weise durch Walzen erfolgen. Dabei werden der Profilkörper PK2 aus Aluminium und das Stabilisierungselement SR aus Stahl gegeneinander verspannt. Eine mechanische Verbindung zwischen Profilkörper und Stabilisierungselement knan auch durch Klebeverbindungen und/oder punktuelle Veribndungselemente gegeben sein.

Fig. 3 zeigt einen Profilkörper PK3 als Aluminium-Strangpressprofil, bei welchem die Rollenführungen LH und LV sowie die Kammer K1 mit dem Profilkörper PK2 nach Fig. 2 übereinstimmen, die Laufflächen LP für die Rollen PR der Planenhalter PH und die Laufflächen LR für die Rollen RR der Rungenhalter RH aber anders ausgebildet sind. Die Kammer K3 ist zu der Kammer K2 hin geöffnet. Als Stabilisierungselement SS sei hier in den Kammern K2 und K3 ein Kunststoffkörper angenommen, welcher in dem genannten Mindestmaß zum Biegewiderstandsmoment des Holms und damit zu dessen Aussteifung beiträgt. Der Kunststoffkörper SS kann insbesondere ein in fließfähiger Form in die Kammern K2, K3 eingebrachter und dort ausgehärteter Kunststoff und/oder ein in den Kammern K2, K3 aufgeschäumter und ausgehärteter Kunststoff sein.

Fig. 4 zeigt ein weiteres Ausführungsbeispiel mit einem Profilkörper PK4 aus Aluminium, an welchem die Kammer K2 und die Führung LV für die Spriegel mit dem Profilkörper PK2 nach Fig. 2 übereinstimmen, bei welchem aber eine Rollenführung LA gegenüber der Kammer K2 bezüglich einer vertikalen Fahrzeugmittellängsebene nach außen versetzt angeordnet ist und die Funktion der Rollenführung LH mit entsprechend anderer Anordnung der zugeordneten Führungsrollen an den Spriegeln übernimmt. Als Stabilisierungselement ist in diesem Beispiel ein Stahlprofil ST mit T-förmigem Querschnitt vorgesehen, welches in eine nach unten offene Nut NU des Profilkörpers PK4 eingesetzt und über eine Kleberschicht KS in der Nut NU befestigt ist. Alternativ oder zusätzlich können Fügeelemente horizontal durch Profilkörper und Stabilsierungselement hindurch greifen und diese punktuell formschlüssig verbinden. Rollenlaufflächen LP und LR für Rollen PR an Planenhaltern PH bzw. Rollen RR an Rungenhaltern RH sind dabei an nach oben weisenden Flächen des Stabilisierungselements ST an dessen horizontal verlaufenden Schenkeln als Laufflächen LP, LR ausgebildet. Die Planenhalter PH und Rollenhalter RH sind durch seitliche Führungsstege an dem Profilkörper PK4 in den Rollenführungen gesichert. Die Kammer K2 enthält in diesem Ausführungsbeispiel kein Stabilisierungselement.

Die verschiedenen Formen der Stabilisierungselemente können auch kombiniert realisiert sein. Die verschiedenen Arten von Stabilsierungselementen und deren Anordnung innerhalb des Holmquerschnitts können auch in anderen Kombinationen als den gezeigten realisiert sein. Die Querschnittsform der Aluminiumkörper PK4 kann im Detail variieren. Die skizzierten Profilkörper sind gegenüber bekannten Profilen in Höhe oder Breite verringert, durch die zusätzlichen Stabilisierungselemente aber dennoch hinreichend stabil für die im Betrieb auftretenden Belastungen. Die Breite der Holmprofile im Bereich der Rollenführungen für Seitenplane und Schieberunge beträgt vorteilhafterweise weniger als 40 mm, die Höhe der Holmprofile vorteilhafterweise weniger als 110 mm. Die Holmprofile können dadurch sowohl die Standard-Curtain-Sider-Profile als auch die Mega-Profile ersetzen und als Universal-Profile auch für Vollplanen-Schiebeverdecke und das sogenannte Hamburger Dach benutzt werden.

Von besonderem Vorteil bei den skizzierten Holmprofilen ist auch, dass die Rollenführungen für die Seitenplanen und für die Schieberungen in Seitenrichtung y nebeneinander angeordnet sind und jeweils nur eine einzige Lauffläche LP bzw. LR aufweisen. Dementsprechend tragen die Planenhalter PH und die Rungenhalter RH jeweils nur nach einer Seite weisend die Rollen PR bzw. RR.

Die Stabilisierungselemente können auch bei gebräuchlichen Profilen zusätzlich angewandt werden.

Das Stabilisierungselement verläuft vorteilhafterweise jeweils über die volle Länge der Profilkörper der Holme, wobei in Endbereichen auch Abschnitte von dem Stabilisierungselement ausgespart bleiben können, um z. B. auf Profilkörper ohne Stabilisierungselemente abgestimmte Verbindungsteile aufzunehmen. Der Holm mit dem Stabilisierungselement ist durch das in Längsrichtung des Holms durchgehende und dem Profil des Profilkörpers angepaßte Stabilisierungselement auch vorteilhafterweise teilbar, so dass der Holm universell auch für Nutzfahrzeugaufbauten mit mehrfach durch feste Rungen abgestützten, in mehrere Abschnitte unterteilten Dachholmen eingesetzt werden kann.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Dachholm mit einem langgestreckten Profilkörper für einen Nutzfahrzeugaufbau, **dadurch gekennzeichnet, dass** mit dem Profilkörper (PK2, PK3, PK4) ein in dessen Längsrichtung (x) langgestreckt verlaufendes, den Profilkörper gegen Durchbiegen aussteifendes Stabilisierungselement (SR, SS, ST) aus einem anderen Werkstoff als dem des Profilkörpers verbunden ist.

2. Dachholm nach Anspruch 1, **dadurch gekennzeichnet, dass** der Profilkörper eine im Querschnitt geschlossene Kammer (K2) aufweist und das Stabilisierungselement (SR) zumindest an einem Teil der Kammerwände anliegt.

3. Dachholm nach Anspruch 1 oder 2, **dadurch gekennzeichnet, dass** der Profilkörper ein Aluminium-Strangpressprofil ist.

4. Dachholm nach einem der Ansprüche 1 bis 3, **dadurch gekennzeichnet, dass** das Stabilisierungselement ein Stahlprofil ist.

5. Dachholm nach einem der Ansprüche 1 bis 3, **dadurch gekennzeichnet, dass** das Stabilisierungselement aus Kunststoff besteht.

6. Dachholm nach einem der Ansprüche 1 bis 5, **dadurch gekennzeichnet, dass** er im unbelasteten Zustand bogenförmig gewölbt ist.

7. Dachholm nach einem der Ansprüche 1 bis 6, **gekennzeichnet durch** Längsführungen (LH, LV, LR, LP) für Planenanordnungen (DP, SP) und/oder Schieberungen (SR1, SR2).

8. Dachholm nach einem der Ansprüche 1 bis 7, **dadurch gekennzeichnet, dass** das Stabilisierungselement wenigstens 25 %, insbesondere wenigstens 35 %, vorzugsweise wenigstens 45 % zu der gesamten Biegesteifigkeit des Dachholms beiträgt.

9. Nutzfahrzeugaufbau mit zwei in Fahrzeuglängsrichtung verlaufenden Dachholmen (HO) nach einem der Ansprüche 1 bis 8, welche jeweils an wenigstens zwei beabstandeten Längspositionen (VW, HR) vertikal abgestützt sind.

10. Nutzfahrzeugaufbau nach Anspruch 9, **dadurch gekennzeichnet, dass** die Dachholme in unbelastetem Zustand nach oben gewölbt verlaufen.

11. Nutzfahrzeugaufbau nach Anspruch 9 oder 10, **dadurch gekennzeichnet, dass** an den Dachholmen eine Planenanordnung längsverschiebbar geführt ist.

12. Nutzfahrzeugaufbau nach einem der Ansprüche 9 bis 11, **dadurch gekennzeichnet, dass** an den Dachholmen wenigstens eine Schieberunge längsverschiebbar geführt ist.

13. Verfahren zur Herstellung eines Dachholms nach einem der Ansprüche 1 bis 8, **dadurch gekennzeichnet, dass** mit dem Profilkörper ein in dessen Längsrichtung verlaufendes, den Profilkörper gegen Durchbiegung aussteifendes Stabilisierungselement verbunden wird.

14. Verfahren nach Anspruch 13, **dadurch gekennzeichnet, dass** ein weiteres Profil als Stabilisierungselement mit dem Profilkörper verbunden wird.

15. Verfahren nach Anspruch 14, **dadurch gekennzeichnet, dass** weitere Profil (SR) in den Profilkörper (PK2) in Längsrichtung (x) eingeschoben wird und quer zur Längsrichtung formschlüssig untrennbar in dem Profilkörper einliegt.

16. Verfahren nach Anspruch 15, **dadurch gekennzeichnet, dass** das weitere Profil (SR) in eine im Querschnitt allseitig geschlossene Kammer (K2) des Profilkörpers (PK2) eingeschoben wird.

17. Verfahren nach einem der Ansprüche 13 bis 16, **dadurch gekennzeichnet, dass** das Stabilisierungselement (ST) mit dem Profilkörper (PK4) verklebt wird.

18. Verfahren nach einem der Ansprüche 13 bis 17, **dadurch gekennzeichnet, dass** das Stabilisierungselement (SS) aus einem fließfähigen Kunststoffmaterial, welches in eine Kammer (K2, K3) des Profilkörpers (PK3) eingebracht wird, durch Aushärten in der Kammer des Profilkörpers hergestellt wird.
